# EUROPEAN PATENT SPECIFICATION

(11) **EP 3 586 950 B1**
(45) Date of publication and mention of the grant of the patent: **03.05.2023**
(21) Application number: 18851560.5
(22) Date of filing: 13.08.2018
(51) Int. Cl.: B01F 27/72, H01M 10/058, H01M 6/52, B01F 35/71, B01F 35/88, H01M 10/54, H01M 4/139

(54) **CONTINUOUS EFFICIENT PRODUCTION PROCESS FOR LITHIUM BATTERY SLURRY**
KONTINUIERLICHES VERFAHREN ZUR EFFIZIENTEN HERSTELLUNG VON LITHIUMBATTERIESCHLAMM
PROCÉDÉ DE PRODUCTION EN CONTINU EFFICACE POUR BOUILLIE DE BATTERIE AU LITHIUM

(30) Priority: 28.08.2017 CN 201710752317; 20.07.2018 CN 201810806350
(43) Date of publication of application: 01.01.2020
(73) Proprietor: Foshan Gold-Silver River Intelligent Equipment Co., Ltd., Foshan, Guangdong 528100 (CN)
(72) Inventor: ZHANG, Qifa, Foshan Guangdong 528100 (CN); YU, Danxian, Foshan Guangdong 528100 (CN); LI, Ming, Foshan Guangdong 528100 (CN)
(74) Representative: Potter Clarkson
(86) International application number: PCT/CN2018/100231
(87) International publication number: WO 2019/042117

(56) References cited:
- CN-A- 1 652 373
- CN-A- 103 268 931
- CN-A- 105 050 702
- CN-A- 107 008 202
- CN-A- 107 297 168
- CN-A- 107 875 885
- CN-A- 108 380 078
- CN-U- 206 008 523
- JP-A- 2005 222 772
- JP-A- 2011 235 258
- JP-A- 2017 042 746
- JP-A- 2017 042 746
- US-A1- 2016 052 171
- US-A1- 2018 093 394

## Description

The present application claims the benefit of priorities to the following two Chinese Patent Applications:
1) Chinese Patent Application No. 201710752317.4, titled "CONTINUOUS EFFICIENT PRODUCTION PROCESS FOR LITHIUM BATTERY SLURRY", filed on August 28, 2017 with the National Intellectual Property Administration, PRC; and
2) Chinese Patent Application No. 201810806350.5, titled "FULLY AUTOMATIC CONTINUOUS PRODUCTION PROCESS FOR LITHIUM BATTERY SLURRY", filed on July 20, 2018 with the National Intellectual Property Administration, PRC.

### FIELD

The present application relates to the technical field of chemical production, and in particular to a continuous efficient production process for a lithium battery slurry, which is mainly used for the production of a new energy lithium battery slurry.

### BACKGROUND

At present, the lithium battery slurry is produced by a conventional intermittent mixer. During the production, the most common process is to prefabricate glue with an adhesive first, and then gradually add powder and other materials.

Prefabricating the glue in this method prolongs the production time, the production efficiency is low, the production cost is high, the viscosity of the slurry in each batch cannot be controlled, and the consistency and the uniformity of the slurry are poor. Documents US2016/0052171, JP2005222772, US2018/0093394 or JP2017042746 describe axial or biaxial screw kneading apparatuses to form anodic or cathodic slurries. They provide a variety of positions for introducing the necessary materials, amongst them, a binder.

### SUMMARY

A continuous efficient production process for a lithium battery slurry is provided according to the present application. According to the process, the adhesive is directly added into a continuous production line, and there is no need to prefabricate the glue with the
adhesive, thereby improving the production efficiency. This is achieved by the features of claim 1 or those of claim 4.

The technical solution of the continuous efficient production process for the lithium battery slurry includes:
first, mixing a main material, an auxiliary material, and part of a liquid material in a front section of a barrel body of a spiral mixing device, wherein the barrel body further comprises a middle section and a rear section, and the front section, the middle section, and the rear section are arranged in sequence;
then, selectively adding an adhesive into the front section or the middle section; and
finally, adding the remaining liquid material into the rear section, wherein the rear section is provided with a discharge port.

In the technical solution of the continuous efficient production process for the lithium battery slurry, the front section comprises a first solid material feed port and a first liquid material feed port, the main material and the auxiliary material enter the front section through the first solid material feed port, and part of the liquid material enters the front section through the first liquid material feed port.

In the technical solution of the continuous efficient production process for the lithium battery slurry, in a case that the adhesive is added to the front section, the adhesive enters the front section through the first solid material feed port.

In the technical solution of the continuous efficient production process for the lithium battery slurry, in a case that the adhesive is added to the middle section, the middle section is provided with a second solid material feed port, and the adhesive enters the middle section through the second solid material feed port.

In the technical solution of the continuous efficient production process for the lithium battery slurry, the rear section is further provided with a second liquid material feed port, and the remaining liquid material enters the rear section through the second liquid material feed port.

Preferably, in the technical solution of the continuous efficient production process for the lithium battery slurry, a stirring shaft is further provided inside the barrel body, which extends in an axial direction from the front section to the rear section.

Preferably, in the technical solution of the continuous efficient production process for the lithium battery slurry, the main material, the auxiliary material and the adhesive are all placed in a powder metering device, and the liquid material is placed in a liquid metering device.

According to the continuous efficient production process for the lithium battery slurry of the present application, there is no need to prefabricate the glue, and the lithium battery slurry can be prepared by directly adding the adhesive to the powder material and the liquid material, which greatly improves the production efficiency and saves labor and material resources. In addition, the continuous automatic production of the lithium battery slurry is realized by the stirring and mixing functions of the spiral mixing device, which greatly improves the production efficiency.

### BRIEF DESCRIPTION OF THE DRAWINGS

In order to more clearly illustrate embodiments of the present application or the technical solutions in the conventional technology, drawings for describing the embodiments or the conventional technology will be briefly described hereinafter. Apparently, the drawings in the following description are only examples of the present application, and for the person skilled in the art, other drawings may be obtained based on the provided drawings without any creative efforts.
Figure 1 is a flow chart of a continuous efficient production process for a lithium battery slurry according to the present application;
Figure 2 is a schematic view of the continuous efficient production process for the lithium battery slurry according to the present application;
Figure 3 is a flow chart of a fully automatic continuous production process for a lithium battery anode slurry, that is, a first embodiment according to the present application;
Figure 4 is a flow chart of a fully automatic continuous production process for a lithium battery cathode slurry, that is, a second embodiment according to the present application; and

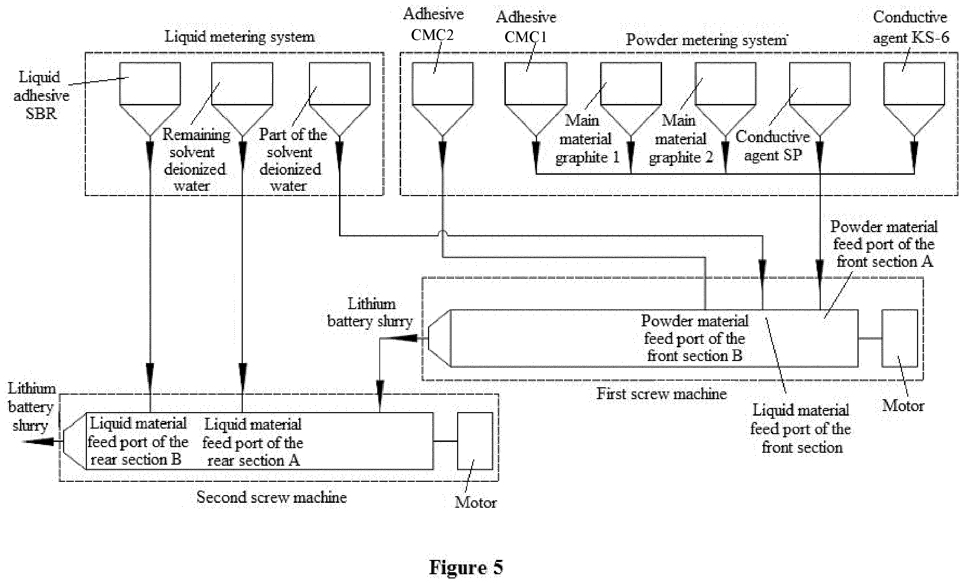

Figure 5 is a flow chart of another fully automatic continuous production process for the lithium battery cathode slurry, that is, a third embodiment according to the present application.

### DETAILED DESCRIPTION OF THE EMBODIMENTS

A continuous efficient production process for a lithium battery slurry is provided according to the present application. According to the process, an adhesive is directly added into a continuous production line, and there is no need to prefabricate a glue with the adhesive, thereby improving the production efficiency. In addition, viscosity of the slurry can be adjusted by adjusting process parameters of the production line to ensure better consistency of the slurry.

The technical solutions in the embodiments of the present application are clearly and completely described hereinafter with reference to the accompanying drawings of the embodiments of the present application. Obviously, the embodiments described hereinafter are only some of the embodiments of the present application, not all of the embodiments. All other embodiments obtained according to the embodiments of the present application by those skilled in the art without any creative efforts fall within the scope of protection of the present application.

The technical solution of the continuous efficient production process for the lithium battery slurry includes the following steps:

In step 101, a main material, an auxiliary material, and part of a liquid material are mixed in a front section of a barrel body of a spiral mixing device, wherein the barrel body further includes a middle section and a rear section, and the front section, the middle section, and the rear section are arranged in sequence.

In the present embodiment, the front section includes a first solid material feed port and a first liquid material feed port, the main material and the auxiliary material enter the front section through the first solid material feed port, and part of the liquid material enters the front section through the first liquid material feed port,

A stirring shaft is further provided inside the barrel body, which extends in an axial direction from the front section to the rear section.

The main material, the auxiliary material and the adhesive are all placed in a powder metering device, and the liquid material is placed in a liquid metering device.

In step 102, the adhesive is selectively added to the front section or the middle section.

In the present embodiment, in a case that the adhesive is added to the front section, the adhesive enters the front section through the first solid material feed port; or in a case that the adhesive is added to the middle section, the middle section is provided with a second solid material feed port, and the adhesive enters the middle section through the second solid material feed port.

In step 103, the remaining liquid material is added to the rear section, wherein the rear section is provided with a discharge port.

In the present embodiment, the rear section is further provided with a second liquid material feed port, and the remaining liquid material enters the rear section through the second liquid material feed port.

The continuous efficient production process for the lithium battery slurry according to the present application is applicable to the production of the lithium battery slurries such as lithium iron phosphate, ternary, lithium manganate, lithium cobalt oxide, multi-element composite lithium, graphite, and lithium titanate.

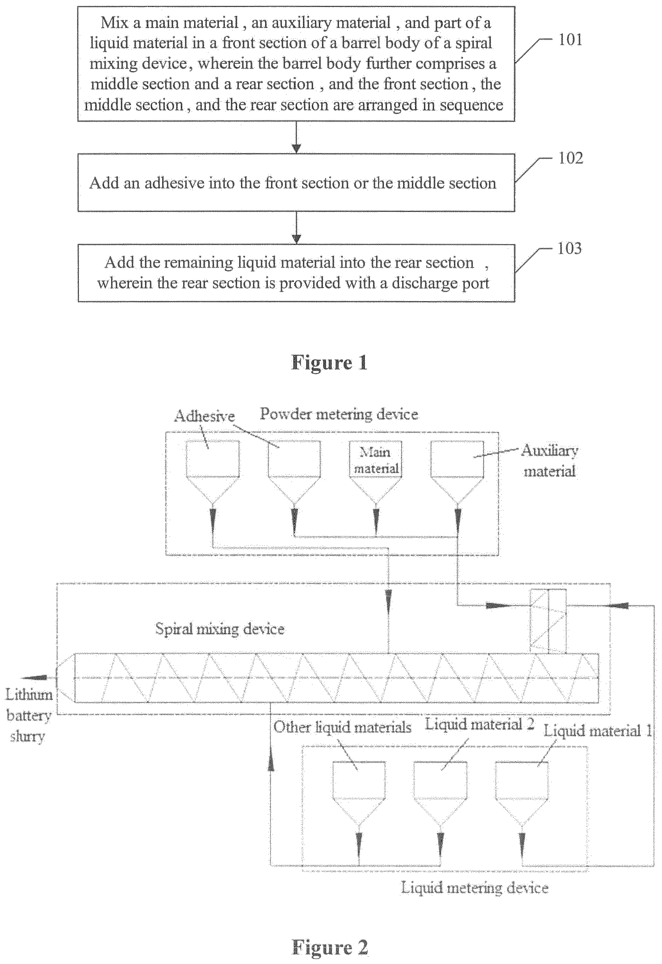

Referring to Figure 2, a lithium battery slurry production system is further provided according to the present application, which includes a powder metering device, a liquid metering device and a spiral mixing device.

### (1) Powder Metering Device

The powder metering device includes multiple storage bins, weighing units and conveying units which are arranged in sequence. The multiple storage bins can be respectively used for placing the solid powder materials such as the main material, the auxiliary material and the adhesive, and each of the storage bins corresponds to one weighing unit and one conveying unit. When the solid powder material enters the weighing unit from the storage bin, the weighing data of the weighing unit is observed in real time. When the weighing data of the weighing unit reaches a predetermined value, the storage bin stops feeding, and the weighed solid powder material is conveyed to a designated position of the spiral mixing device through the conveying unit.

### (2) Liquid Metering Device

The liquid metering device has the same structure as the powder metering device, except that it is the liquid material placed in the liquid metering device, and will not be described again.

### (3) Spiral Mixing Device

The spiral mixing device includes the barrel body and the stirring shaft located in the barrel body, and the barrel body includes the front section, the middle section and the rear section which are sequentially arranged. The conveying unit of the main material and the auxiliary material communicates with the front section, the conveying unit of the adhesive can selectively communicate with the front section or the middle section, and the conveying unit of the liquid material communicates with the front section and the rear section, respectively.

The front section is provided with the first solid material feed port and the first liquid material feed port. The first solid material feed port is configured to connect with the conveying unit of the liquid feed device, and the first liquid material feed port is connected with a part of the conveying units of the liquid metering device.

In a case that the adhesive is introduced into the barrel body from the front section, the adhesive enters the barrel body through the first solid material feed port; in a case that the adhesive is introduced into the barrel body from the middle section, the middle section may be provided with the second solid material feed port for adding the adhesive. It can be understood that the adhesive can be added from the front section or from the middle section according to the process.

The rear section is further provided with the second liquid material feed port which is connected with the remaining conveying units of the liquid metering device.

As can be seen from the above detailed description, the lithium battery slurry production system of the present application uses the powder metering device to directly feed all the solid powder materials into the spiral mixing device in proportion, wherein the main material and the auxiliary material are added from the front section of the barrel body of the spiral mixing device, and the adhesive can be added from the front or middle section of the barrel body according to the process. In addition, all the liquid materials are proportionally fed into the spiral mixing device by means of the liquid metering device, wherein a part of the liquid materials is added from the front section, and the remaining liquid materials is added from the rear section. The discharge viscosity of the slurry can be adjusted without changing a formulation ratio by adjusting a volume of the liquid materials added from the front section and adjusting a volume of the liquid materials added from the rear section. Besides, the solid powder materials and the liquid materials for producing the lithium battery slurry are continuously mixed by the spiral mixing device to realize the fully automatic continuous production, to finally produce the lithium battery slurry satisfying the requirements. The slurry has better viscosity and consistency.

The lithium battery slurry described in the present application includes an anode slurry or a cathode slurry, and the anode slurry and the cathode slurry include the main material, a conductive agent, the adhesive and a solvent. The main material of the anode includes, but is not limited to, lithium iron phosphate, ternary composite lithium, lithium manganate, lithium cobalt oxide and the like; the main material of the cathode includes, but is not limited to, graphite, lithium carbonate, lithium titanate, silicon carbon cathode material and the like; the conductive agent includes, but is not limited to, SP, KS-6, CNT, PVP and the like; the adhesive includes, but is not limited to, PVDF, CMC, LA, SBR and the like; and the solvent includes, but is not limited to, NMP, deionized water and the like.

Through the above examples, the lithium battery slurry can be classified into the liquid material and the powder material based on the solid-liquid property, and the liquid material and the powder material are mixed by the spiral mixing system to produce the slurry. Specifically, the spiral mixing system is divided into the front section and the rear section according to a conveying direction, the front section is provided with a powder material feed port and a liquid material feed port, and the rear section is provided with a liquid material feed port.

The spiral mixing system includes, but is not limited to, one or more screw machines connected in series, and the screw machine may be, but not limited to, a twin screw machine or a multi-thread screw machine. Each of the screw machines is provided with the stirring shaft, and the stirring shaft extends in the direction from the front section to the rear section. The stirring shaft has a biaxial or multiaxial structure, and a rotation mode is co-direction rotation or counter-direction rotation. The stirring shaft extends axially in the direction from the front section to the rear section.

The one or more screw machines connected in series are divided into the front section and the rear section in an overall length direction, the front section includes one or more powder material feed ports and one or more liquid material feed ports, and the rear section includes one or more liquid material feed ports. The main material, the conductive agent, the powder adhesive and the like of the lithium battery slurry can be added through the powder material feed port of the front section. The conductive liquid, the liquid adhesive, the solvent and the like can be added through the liquid material feed port of the front section. The remaining solvents, the remaining liquid adhesives and the like can be added through the liquid material feed port of the rear section.

In addition to the screw machine, the spiral mixing system further includes multiple storage bins for storing the powder or liquid materials. Each of the storage bins corresponds to one weighing unit and one conveying unit. The powder or liquid material weighed by the weighing unit is conveyed to the screw machine through the conveying unit. It should be noted that the storage bin in which the powder material is stored, the corresponding weighing unit and the corresponding conveying unit can be defined as a powder metering system, and the storage bin in which the liquid material is stored, the corresponding weighing unit and the corresponding conveying unit can be defined as a liquid metering system.

The powder metering system includes multiple storage bins, weighing units and conveying units which are arranged in sequence. The multiple storage bins can be respectively used for placing the powder materials such as the main material, the conductive agent and the adhesive, and each of the storage bins corresponds to one weighing unit and one conveying unit. When the powder material enters the weighing unit from the storage bin, the weighing data of the weighing unit is observed in real time. When the weighing data of the weighing unit reaches the predetermined value, the storage bin stops feeding, and the weighed solid powder material is conveyed to the designated position of the spiral mixing device through the conveying unit. The liquid metering system has the same structure as the powder metering system, except that it is the liquid material placed in the liquid metering system, and will not be described again.

Three embodiments are described in detail hereinafter in conjunction with Figures 1 to 3.

### First Embodiment

Figure 1 is a production process for the lithium battery anode slurry. The main material of the anode includes lithium iron phosphate, the conductive agent includes a SP powder material and a CNT liquid material, the adhesive includes a PVDF powder material, and the solvent includes NMP

In the first embodiment, one screw machine is used. The screw machine is a twin screw machine, one powder material feed port and one liquid material feed port are provided in the front section, and another liquid material feed port is provided in the rear section.

As shown in Figure 1, the powder materials such as the lithium iron phosphate, the conductive agent SP and the adhesive PVDF enter the front section of the screw machine from the powder material feed port of the front section. The CNT liquid material and part of the NMP enter the front section of the screw machine from the liquid material feed port of the front section. The remaining NMP enters the rear section of the screw machine from the liquid material feed port of the rear section.

### Second Embodiment

Figure 2 is a production process for the lithium battery cathode slurry. The main material of the cathode includes graphite, the conductive agent includes the SP powder material, the adhesive includes a powder adhesive CMC and a liquid adhesive SBR, and the solvent includes deionized water.

In the second embodiment, one screw machine is used. The screw machine is the twin screw machine, one powder material feed port and one liquid material feed port are provided in the front section, and two liquid material feed ports A and B are provided in the rear section.

As shown in Figure 2, the powder materials such as the graphite, the conductive agent SP and the adhesive CMC enter the front section of the screw machine from the powder material feed port of the front section. Part of the deionized water enters the front section of the screw machine from the liquid material feed port of the front section. The remaining deionized water enters the rear section of the screw machine from the liquid material feed port A of the rear section, and the liquid adhesive SBR enters the rear section of the screw machine from the liquid material feed port B of the rear section.

### Third Embodiment

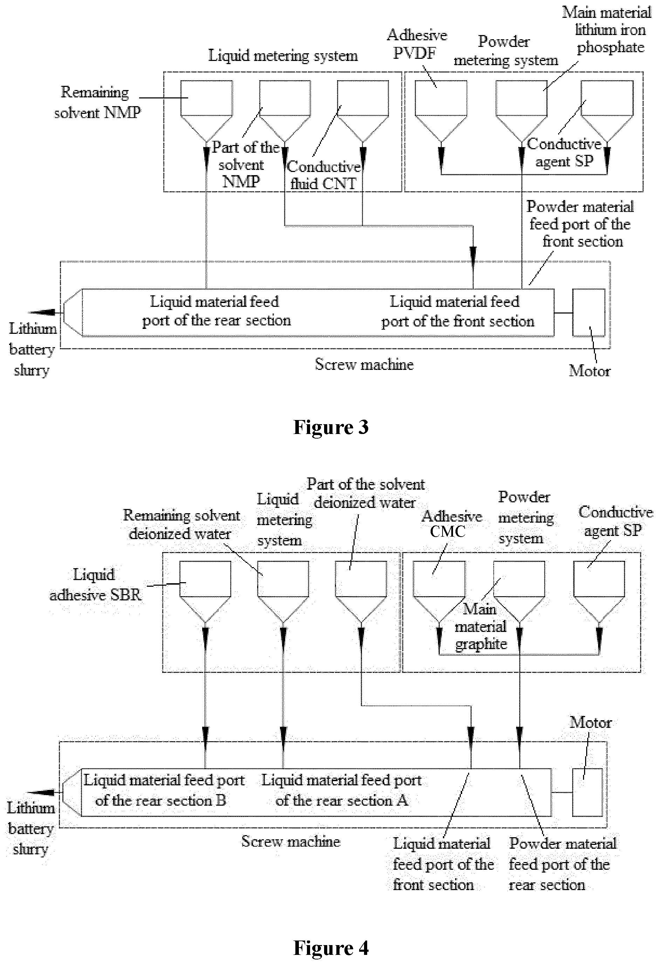

Figure 3 is a production process for the lithium battery cathode slurry. The main material of the cathode includes graphite 1 and graphite 2. The conductive agent includes the SP powder material and a KS-6 powder material. The adhesive includes powder adhesives CMC1 and CMC2, and the liquid adhesive SBR. The solvent includes the deionized water.

In the third embodiment, two screw machines connected in series are used. Each of the screw machines is the twin screw machine. Two powder material feed ports A and B and one liquid material feed port are provided in the front section of the two screw machines in a total length direction, and two liquid material feed ports A and B are provided in the rear section of the two screw machines in the total length direction.

As shown in Figure 3, the main material graphite 1, the main material graphite 2, the conductive agent SP, the conductive agent KS-6 and the adhesive CMC1 enter the front section of the screw machines from the powder material feed port A of the front section of the two screw machines connected in series in the total length direction. The adhesive CMC2 enters the front section of the screw machines from the powder material feed port B of the front section of the two screw machines connected in series in the total length direction. Part of the deionized water enters the front section of the screw machines from the liquid material feed port of the front section of the two screw machines connected in series in the total length direction. The remaining deionized water enters the rear section of the screw machines from the liquid material feed port A of the rear section of the two screw machines connected in series in the total length direction. The liquid adhesive SBR enters the rear section of the screw machines from the liquid material feed port B of the rear section of the two screw machines connected in series in the total length direction.

In the first embodiment to the third embodiment, in a case that a part of the liquid materials is added from the front section, and the remaining liquid materials is added from the rear section, the discharge viscosity of the slurry can be adjusted without changing a formulation ratio by adjusting a volume of the liquid materials added from the front section and correspondingly adjusting a volume of the liquid materials added from the rear section.

It should be noted that, in the front section of the single screw machine or the multiple screw machines connected in series, the main material, the conductive agent, the powder adhesive and the like of the lithium battery slurry can be added through the powder material feed port; and the conductive liquid, the liquid adhesive, the solvent and the like can be added through the liquid material feed port.

In the rear section of the single screw machine or the multiple screw machines connected in series, the remaining solvents, the remaining liquid adhesives and the like can be added through the liquid material feed port.

The fully automatic and continuous production process for the lithium battery slurry according to the present application is applicable to the production of the lithium battery slurries such as lithium iron phosphate, ternary, lithium manganate, lithium cobalt oxide, multi-element composite lithium, graphite, and lithium titanate.

As can be seen from the above detailed description, the fully automatic and continuous production process for the lithium battery slurry according to the present application uses the powder metering system and the liquid metering system to directly feed all the powder materials and the liquid materials into the screw machine in proportion, that is, the main material and the conductive agent, the adhesive and the solvent of the lithium battery slurry can be added from different feed ports of the front or rear section of the screw machine according to different processes. The powder materials and the liquid materials for producing the lithium battery slurry are continuously mixed and dispersed by the screw machine to realize the fully automatic and continuous production, to finally produce the lithium battery slurry satisfying the requirements. The slurry has better viscosity and consistency. Besides, according to the present application, the adhesive can be directly added into the screw machine, and there is no need to prefabricate the glue, thereby improving the production efficiency.

The above embodiments are only provided for illustrating the technical solutions of the present application, rather than limiting the technical solutions. Although the present application is illustrated in detail by referring to the aforementioned embodiments, it should be understood by those skilled in the art that modifications can be still made to the technical solutions recited in the aforementioned embodiments, or equivalent substitution can be made to a part of technical features of the technical solutions as disclosed in the appended claims.

## Claims

1. A continuous efficient production process for a lithium battery slurry, comprising
mixing a main material, an auxiliary material, and part of a liquid material in a front section of a barrel body of a spiral mixing device, wherein the barrel body further comprises a middle section and a rear section, and the front section, the middle section, and the rear section are arranged in sequence;
selectively adding an adhesive into the front section or the middle section; and
adding the remaining liquid material into the rear section, wherein the rear section is provided with a discharge port;
wherein the main material comprises anode main material or cathode main material, wherein the anode main material is selected from lithium iron phosphate, ternary composite lithium, lithium manganite and lithium cobalt oxide, and the cathode main material is selected from graphite, lithium carbonate, lithium titanate and silicon carbon cathode material; the auxiliary material is conductive agent, and the liquid material is solvent;
wherein the front section comprises a first solid material feed port and a first liquid material feed port, the main material and the auxiliary material enter the front section through the first solid material feed port, and part of the liquid material enters the front section through the first liquid material feed port;
wherein in a case that the adhesive is added to the front section, the adhesive enters the front section through the first solid material feed port, and in a case that the adhesive is added to the middle section, the middle section is provided with a second solid material feed port, and the adhesive enters the middle section through the second solid material feed port; and
wherein the rear section is further provided with a second liquid material feed port, and the remaining liquid material enters the rear section through the second liquid material feed port.

2. The continuous efficient production process for the lithium battery slurry according to claim 1, wherein a stirring shaft is further provided inside the barrel body, which extends in an axial direction from the front section to the rear section.

3. The continuous efficient production process for the lithium battery slurry according to claim 1, wherein the main material, the auxiliary material and the adhesive are all placed in a powder metering device, and the liquid material is placed in a liquid metering device.

4. A fully automatic continuous production process for a lithium battery slurry, wherein the lithium battery slurry is classified into a powder material and a liquid material, the liquid materials and the powder materials are added to a spiral mixing system according to a preset manner, in which the spiral mixing system is divided into the front section and the rear section according to a conveying direction, the front section is provided with a powder material feed port and a first liquid material feed port, and the rear section is provided with a second liquid material feed port;
wherein the powder material comprises main material, conductive agent and powder adhesive, and the liquid material comprises conductive liquid, liquid adhesive and solvent;
wherein the main material, the conductive agent and the powder adhesive are added through the powder material feed port of the front section; the conductive liquid, a part of the liquid adhesive and a part of the solvent are added through the first liquid material feed port of the front section; the remaining solvent and the remaining liquid adhesive are added through the second liquid material feed port of the rear section;
wherein the main material comprises anode main material or cathode main material, wherein the anode main material is selected from lithium iron phosphate, ternary composite lithium, lithium manganite and lithium cobalt oxide, and the cathode main material is selected from graphite, lithium carbonate, lithium titanate and silicon carbon cathode material;
wherein the spiral mixing system comprises one or more screw machines connected in series, and the one or more screw machines are divided into the front section and the rear section according to the conveying direction;
wherein each screw machine is a twin screw machine or a multi-thread screw machine;
wherein a stirring shaft is provided inside each screw machine, which extends in an axial direction from the front section to the rear section; and
wherein the stirring shaft has a biaxial or multiaxial structure, and a rotation mode of the stirring shaft is co-direction rotation or counter-direction rotation.

5. The fully automatic continuous production process for the lithium battery slurry according to claim 4, wherein the spiral mixing system further comprises a plurality of storage bins, the storage bins are configured to store the powder or liquid materials, each of the storage bins corresponds to one weighing unit and one conveying unit, and the powder or liquid material weighed by the weighing unit is conveyed to the screw machine through the conveying unit.

6. A production system for a lithium battery slurry in the fully automatic continuous production process for a lithium battery slurry according to claim 4, comprising a powder metering device, a liquid metering device and a spiral mixing system;
in a material conveying direction, the spiral mixing system comprises one or more screw machines connected in series, and the one or more screw machines are divided into the front section and the rear section according to the conveying direction, the front section is provided with a powder material feed port and a first liquid material feed port, and the rear section is provided with a second liquid material feed port and a lithium battery slurry outlet; and
an outlet of the powder metering device is connected with an inlet of the powder material feed port, and an outlet of the liquid metering device is connected with the first liquid material feed port of the front section and the second liquid material feed port of the rear section, respectively.

7. A production system for a lithium battery slurry in the continuous efficient production process for a lithium battery slurry according to claim 1, comprising a powder metering device, a liquid metering device and a spiral mixing device;
in a material conveying direction, the spiral mixing device is divided into a front section, a middle section and a rear section, the front section is provided with a first solid material feed port and a first liquid material feed port, the middle section is provided with a second solid material feed port, and the rear section is provided with a second liquid material feed port.

## Patentansprüche

1. Kontinuierliches effizientes Herstellungsverfahren für eine Lithiumbatterie-Aufschlämmung,
umfassend
Mischen eines Hauptmaterials, eines Hilfsmaterials und eines Teils eines flüssigen Materials in einem vorderen Abschnitt eines Trommelkörpers einer Wendelmischvorrichtung, wobei der Trommelkörper ferner einen mittleren Abschnitt und einen hinteren Abschnitt umfasst und der vordere Abschnitt, der mittlere Abschnitt und der hintere Abschnitt in Folge angeordnet sind;
selektives Hinzufügen eines Klebstoffs in den vorderen Abschnitt oder den mittleren Abschnitt; und
Hinzufügen des verbleibenden flüssigen Materials in den hinteren Abschnitt, wobei der hintere Abschnitt mit einer Abgabeöffnung versehen ist;
wobei das Hauptmaterial Anodenhauptmaterial oder Kathodenhauptmaterial umfasst, wobei das Anodenhauptmaterial ausgewählt ist aus Lithiumeisenphosphat, ternär zusammengesetztem Lithium, Lithiummanganit und Lithiumkobaltoxid, und das Kathodenhauptmaterial ausgewählt ist aus Graphit, Lithiumcarbonat, Lithiumtitanat und Siliciumkohlenstoff-Kathodenmaterial; das Hilfsmaterial ist ein leitfähiges Mittel und das flüssige Material ist ein Lösungsmittel;
wobei der vordere Abschnitt eine erste Zufuhröffnung für festes Material und eine erste Zufuhröffnung für flüssiges Material umfasst, das Hauptmaterial und das Hilfsmaterial durch die erste Feststoffzufuhröffnung in den vorderen Abschnitt eintreten, und ein Teil des flüssigen Materials in den vorderen Abschnitt durch die erste Zufuhröffnung für flüssiges Material eintritt; wobei in einem Fall, in dem der Klebstoff dem vorderen Abschnitt hinzugefügt wird, der Klebstoff durch die erste Zufuhröffnung für festes Material in den vorderen Abschnitt eintritt, und in einem Fall, dass der Klebstoff dem mittleren Abschnitt hinzugefügt wird, der mittlere Abschnitt mit einer zweiten Zufuhröffnung für festes Material versehen ist, und der Klebstoff durch die zweite Zufuhröffnung für festes Material in den mittleren Abschnitt eintritt; und
wobei der hintere Abschnitt ferner mit einer zweiten Zufuhröffnung für flüssiges Material versehen ist und das restliche flüssige Material durch die zweite Zufuhröffnung für flüssiges Material in den hinteren Abschnitt eintritt.

2. Kontinuierliches effizientes Herstellungsverfahren für die Lithiumbatterie-Aufschlämmung nach Anspruch 1, wobei ferner eine Rührwelle innerhalb des Trommelkörpers vorgesehen ist, die sich in einer axialen Richtung von dem vorderen Abschnitt zu dem hinteren Abschnitt erstreckt.

3. Kontinuierliches effizientes Herstellungsverfahren für die Lithiumbatterie-Aufschlämmung nach Anspruch 1, wobei das Hauptmaterial, das Hilfsmaterial und der Klebstoff alle in eine Pulverdosiervorrichtung eingebracht werden und das flüssige Material in eine Flüssigkeitsdosiervorrichtung eingebracht wird.

4. Vollautomatisches kontinuierliches Herstellungsverfahren für eine Lithiumbatterie-Aufschlämmung, wobei die Lithiumbatterie-Aufschlämmung in ein Pulvermaterial und ein flüssiges Material klassifiziert wird, die flüssigen Materialien und die pulverförmigen Materialien gemäß einer vorgegebenen Weise einem Wendelmischsystem zugeführt werden, wobei das Wendelmischsystem gemäß einer Förderrichtung in den vorderen Abschnitt und den hinteren Abschnitt unterteilt ist, der vordere Abschnitt mit einer Pulvermaterial-Zufuhröffnung und einer ersten Flüssigmaterial-Zufuhröffnung versehen ist, und der hintere Abschnitt mit einer zweiten Zufuhröffnung für flüssiges Material versehen ist;
wobei das Pulvermaterial Hauptmaterial, leitfähiges Mittel und Pulverklebstoff umfasst und das flüssige Material leitfähige Flüssigkeit, flüssigen Klebstoff und Lösungsmittel umfasst;
wobei das Hauptmaterial, das leitfähige Mittel und der Pulverklebstoff durch die Pulvermaterial-Zufuhröffnung des vorderen Abschnitts hinzugefügt werden; die leitfähige Flüssigkeit, ein Teil des flüssigen Klebstoffs und ein Teil des Lösungsmittels durch die erste Zufuhröffnung für flüssiges Material des vorderen Abschnitts zugegeben werden; das restliche Lösungsmittel und der restliche flüssige Klebstoff durch die zweite Zufuhröffnung für flüssiges Material des hinteren Abschnitts zugegeben werden;
wobei das Hauptmaterial Anodenhauptmaterial oder Kathodenhauptmaterial umfasst, wobei das Anodenhauptmaterial ausgewählt ist aus Lithiumeisenphosphat, ternär zusammengesetztem Lithium, Lithiummanganit und Lithiumcobaltoxid, und das Kathodenhauptmaterial ausgewählt ist aus Graphit, Lithiumcarbonat, Lithiumtitanat und Siliziumkohlenstoff-Kathodenmaterial;
wobei das Wendelmischsystem eine oder mehrere in Reihe geschaltete Schneckenmaschinen umfasst und die eine oder mehreren Schneckenmaschinen entsprechend der Förderrichtung in den vorderen Abschnitt und den hinteren Abschnitt unterteilt sind;
wobei jede Schneckenmaschine eine Doppelschneckenmaschine oder eine mehrgängige Schneckenmaschine ist;
wobei innerhalb jeder Schneckenmaschine eine Rührwelle vorgesehen ist, die sich in einer axialen Richtung von dem vorderen Abschnitt zu dem hinteren Abschnitt erstreckt; und
wobei die Rührwelle eine biaxiale oder multiaxiale Struktur hat und ein Rotationsmodus der Rührwelle eine Rotation in gleicher Richtung oder eine Rotation in Gegenrichtung ist.

5. Vollautomatisches kontinuierliches Herstellungsverfahren für die Lithiumbatterie-Aufschlämmung nach Anspruch 4, wobei das Wendelmischsystem ferner eine Vielzahl von Vorratsbehältern umfasst, die Vorratsbehälter so konfiguriert sind, dass sie Pulver oder flüssige Materialien lagern, jeder Vorratsbehälter einer Wiegeeinheit und einer Fördereinheit entspricht und das von der Wiegeeinheit gewogene Pulver oder flüssige Material durch die Fördereinheit zu der Schneckenmaschine befördert wird.

6. Herstellungsanlage für eine Lithiumbatterie-Aufschlämmung im vollautomatischen kontinuierlichen Herstellungsverfahren für eine Lithiumbatterie-Aufschlämmung nach Anspruch 4, umfassend eine Pulverdosiervorrichtung, eine Flüssigkeitsdosiervorrichtung und ein Wendelmischsystem;
das Wendelmischsystem in Materialförderrichtung eine oder mehrere hintereinander geschalteten Schneckenmaschinen umfasst und die eine oder mehreren Schneckenmaschinen entsprechend der Förderrichtung in den vorderen Abschnitt und den hinteren Abschnitt unterteilt sind, der vordere Abschnitt mit einer Pulvermaterial-Zufuhröffnung und einer ersten Flüssigmaterial-Zufuhröffnung versehen ist und der hintere Abschnitt mit einer zweiten Zufuhröffnung für flüssiges Material und einem Lithiumbatterie-Aufschlämmung-Auslass versehen ist; und
ein Auslass der Pulverdosiervorrichtung mit einem Einlass der Pulvermaterial-Zufuhröffnung verbunden ist und ein Auslass der Flüssigkeitsdosiervorrichtung mit der ersten Zufuhröffnung für flüssiges Material des vorderen Abschnitts bzw. der zweiten Zufuhröffnung für flüssiges Material des hinteren Abschnitts verbunden ist.

7. Herstellungssystem für eine Lithiumbatterie-Aufschlämmung in dem kontinuierlichen effizienten Herstellungsverfahren für eine Lithiumbatterie-Aufschlämmung nach Anspruch 1, umfassend eine Pulverdosiervorrichtung, eine Flüssigkeitsdosiervorrichtung und eine Wendelmischvorrichtung;
die Wendelmischvorrichtung in Materialförderrichtung in einen vorderen Abschnitt, einen mittleren Abschnitt und einen hinteren Abschnitt unterteilt ist, der vordere Abschnitt mit einer ersten Zufuhröffnung für festes Material und einer ersten Zufuhröffnung für flüssiges Material versehen ist, der mittlere Abschnitt mit einer zweiten FeststoffZufuhrung versehen ist und der hintere Abschnitt mit einer zweiten Zufuhröffnung für flüssiges Material versehen ist.

## Revendications

1. Procédé de production en continu efficace pour une bouillie de batterie au lithium, comprenant
le mélange d'un matériau principal, d'un matériau auxiliaire et d'une partie d'un matériau liquide dans une section avant d'un corps de cylindre d'un dispositif de mélange en spirale, dans lequel le corps de cylindre comprend en outre une section médiane et une section arrière, et la section avant, la section médiane, et la section arrière sont disposées en séquence ;
l'ajout sélectif d'un adhésif dans la section avant ou la section médiane ; et
l'ajout du matériau liquide restant dans la section arrière, dans lequel la section arrière est pourvue d'un orifice de décharge ;
dans lequel le matériau principal comprend un matériau principal d'anode ou un matériau principal de cathode, dans lequel le matériau principal d'anode est choisi parmi le phosphate de fer lithium, le lithium composite ternaire, le manganite de lithium et l'oxyde de lithium-cobalt, et le matériau principal de cathode est choisi parmi le graphite, le carbonate de lithium, le matériau de titanate de lithium et de cathode de silicium-carbone ; le matériau auxiliaire est un agent conducteur et le matériau liquide est un solvant ;
dans lequel la section avant comprend un premier orifice d'alimentation en matériau solide et un premier orifice d'alimentation en matériau liquide, le matériau principal et le matériau auxiliaire pénètrent dans la section avant par le premier orifice d'alimentation en matériau solide, et une partie du matériau liquide pénètre dans la section avant par le premier orifice d'alimentation en matériau liquide ;
dans lequel, dans le cas où l'adhésif est ajouté à la section avant, l'adhésif entre dans la section avant par le premier orifice d'alimentation en matériau solide, et dans le cas où l'adhésif est ajouté à la section médiane, la section médiane est pourvue d'un second orifice d'alimentation en matériau solide, et l'adhésif entre dans la section médiane par le second orifice d'alimentation en matériau solide ; et
dans lequel la section arrière est en outre pourvue d'un second orifice d'alimentation en matériau liquide, et le matériau liquide restant entre dans la section arrière par le second orifice d'alimentation en matériau liquide.

2. Procédé de production en continu efficace pour la bouillie de batterie au lithium selon la revendication 1, dans lequel un arbre d'agitation est en outre pourvu à l'intérieur du corps de cylindre, qui s'étend dans une direction axiale de la section avant à la section arrière.

3. Procédé de production en continu efficace pour la bouillie de batterie au lithium selon la revendication 1, dans lequel le matériau principal, le matériau auxiliaire et l'adhésif sont tous placés dans un dispositif de dosage de poudre, et le matériau liquide est placé dans un dispositif de dosage de liquide.

4. Procédé de production en continu entièrement automatique pour une bouillie de batterie au lithium, dans lequel la bouillie de batterie au lithium est classée en un matériau en poudre et un matériau liquide, les matériaux liquides et les matériaux en poudre sont ajoutés à un système de mélange en spirale selon une manière prédéfinie, dans lequel le système de mélange en spirale est divisé en une section avant et une section arrière selon une direction de transport, la section avant est pourvue d'un orifice d'alimentation en matériau en poudre et d'un premier orifice d'alimentation en matériau liquide, et la section arrière est pourvue d'un second orifice d'alimentation en matériau liquide ;
dans lequel le matériau en poudre comprend un matériau principal, un agent conducteur et un adhésif en poudre, et le matériau liquide comprend un liquide conducteur, un adhésif liquide et un solvant ;
dans lequel le matériau principal, l'agent conducteur et l'adhésif en poudre sont ajoutés par l'orifice d'alimentation en matériau en poudre de la section avant ; le liquide conducteur, une partie de l'adhésif liquide et une partie du solvant sont ajoutés par le premier orifice d'alimentation en matériau liquide de la section avant ; le solvant restant et l'adhésif liquide restant sont ajoutés par le second orifice d'alimentation en matériau liquide de la section arrière ;
dans lequel le matériau principal comprend un matériau principal d'anode ou un matériau principal de cathode, dans lequel le matériau principal d'anode est choisi parmi le phosphate de fer lithium, le lithium composite ternaire, le manganite de lithium et l'oxyde de lithium-cobalt, et le matériau principal de cathode est choisi parmi le graphite, le carbonate de lithium, le matériau de titanate de lithium et de cathode de silicium-carbone ;
dans lequel le système de mélange en spirale comprend une ou plusieurs machines à vis connectées en série, et les une ou plusieurs machines à vis sont divisées en section avant et section arrière selon la direction de transport ;
dans lequel chaque machine à vis est une machine à double vis ou une machine à vis multifil ;
dans lequel un arbre d'agitation est pourvu à l'intérieur de chaque machine à vis, qui s'étend dans une direction axiale de la section avant à la section arrière ; et
dans lequel l'arbre d'agitation a une structure biaxiale ou multiaxiale, et un mode de rotation de l'arbre d'agitation est une rotation dans le même sens ou une rotation dans le sens contraire.

5. Procédé de production en continu entièrement automatique pour la bouillie de batterie au lithium selon la revendication 4, dans lequel le système de mélange en spirale comprend en outre une pluralité de bacs de stockage, les bacs de stockage sont configurés pour stocker les matériaux en poudre ou liquides, chacun des bacs de stockage correspond à une unité de pesée et une unité de transport, et la poudre ou le matériau liquide pesés par l'unité de pesage sont transportés vers la machine à vis à travers l'unité de transport.

6. Système de production d'une bouillie de batterie au lithium dans le procédé de production en continu entièrement automatique pour une bouillie de batterie au lithium selon la revendication 4, comprenant un dispositif de dosage de poudre, un dispositif de dosage de liquide et un système de mélange en spirale ;
dans une direction de transport de matériau, le système de mélange en spirale comprend une ou plusieurs machines à vis connectées en série, et les une ou plusieurs machines à vis sont divisées en une section avant et une section arrière selon la direction de transport, la section avant est pourvue d'un orifice d'alimentation en matériau en poudre et d'un premier orifice d'alimentation en matériau liquide, et la section arrière est pourvue d'un second orifice d'alimentation en matériau liquide et d'une sortie de batterie au lithium ; et
une sortie du dispositif de dosage de poudre est reliée à une entrée de l'orifice d'alimentation en matériau en poudre, et une sortie du dispositif de dosage de liquide est reliée au premier orifice d'alimentation en matériau liquide de la section avant et au second orifice d'alimentation en matériau liquide de la section arrière, respectivement.

7. Système de production d'une bouillie de batterie au lithium dans le procédé de production en continu efficace d'une bouillie de batterie au lithium selon la revendication 1, comprenant un dispositif de dosage de poudre, un dispositif de dosage de liquide et un dispositif de mélange en spirale ;
dans une direction de transport de matériau, le dispositif de mélange en spirale est divisé en une section avant, une section médiane et une section arrière, la section avant est pourvue d'un premier orifice d'alimentation en matériau solide et d'un premier orifice d'alimentation en matériau liquide, la section médiane est pourvue avec un second orifice d'alimentation en matériau solide, et la section arrière est pourvue d'un second orifice d'alimentation en matériau liquide.
